# EUROPEAN PATENT SPECIFICATION

(11) **EP 4 173 940 B1**
(45) Date of publication and mention of the grant of the patent: **08.10.2025**
(21) Application number: 22020509.0
(22) Date of filing: 24.10.2022
(51) Int. Cl.: B62M 6/75

(54) **KIT TO MOTORIZE A BICYCLE**
BAUSATZ ZUR MOTORISIERUNG EINES FAHRRADS
KIT POUR MOTORISER UN VÉLO

(30) Priority: 26.10.2021 IT 202100027440
(43) Date of publication of application: 03.05.2023
(73) Proprietor: Columbus Innovation Technology S.r.l., 50125 Firenze (IT)
(72) Inventor: POLO, Francesco, 50125 Firenze (IT)

(56) References cited:
- EP-A1- 2 894 089
- WO-A1-2018/022056
- CN-U- 207 644 561
- CN-U- 209 159 926
- KR-B1- 101 972 821
- US-A1- 2005 077 096
- US-A1- 2016 167 735
- US-B2- 10 005 518
- US-B2- 9 758 214

## Description

The present invention relates to a kit to motorize a bicycle.

It is known that electric mobility with two-wheeled vehicles is on the rise, in particular as regards bicycles; it is also known that electric bicycles have a higher cost than a traditional pedal bicycle due to their composition which includes a reinforced frame, removable batteries, electric motors and related lighting, command and control devices.

Parallel to the increased diffusion of electric bicycles, the number of thefts of these vehicles has unfortunately also increased, resulting in relatively high damage due to the cost of the vehicle. In many models it is possible to remove the battery pack from the bicycle, but the most expensive part of the same, namely the driving part, is always associated with the same bicycle and therefore causes a damage that is, substantially, the same of the entire vehicle. In other words, the theft of the bicycle even without the battery pack still causes considerable damage to the owner.

Among the aims of the present invention there is that of transforming a normal bicycle of substantially any type, size and use, into an electric bicycle, including pedal assisted, in which it is possible to separate, in an extremely simple and rapid way, the entire drive unit from the vehicle frame.

Another purpose is to provide the motorization system with the possibility of at least partial recharging of the battery by exploiting by transforming the kinetic energy determined by a downhill path and / or by the intervention of the pedals by the user.

A further object of the invention is to provide a kit comprising a motorization unit and two or more fixing frames so as to be able to use the same unit on different bicycles.

Attempts to solve the above problems are described in US2016347408A1, US9758214B2, US2016167735A1 and US5842535A, which relate to systems capable of motorizing a bicycle; the systems described in these documents do not completely solve the drawbacks of the known art. The purpose of the present invention is to solve all the aforementioned known drawbacks with a solution which is simple to implement and easy to use. US 9 758 214 B2 is considered as the closest prior art and discloses all of the features of the preamble of claim 1.

This result has been achieved, in accordance with the present invention, by adopting the idea of making a kit for the motorization of a bicycle and similar vehicles having the features indicated in claim 1. Other innovative features are described in the dependent claims.

Among the advantages offered by the present invention it is possible to list the following: it is possible to motorize bicycles of substantially any type, size and use with a kit which is simple to make and easy to use; it is possible to associate and disassociate the main (and most expensive) part of the kit, represented by the drive unit, from the rest of the kit, leaving only the fixing frame of the kit fixed to the bicycle frame which is relatively inexpensive and which, taken individually, it can hardly be an object of theft; it is possible to associate and disassociate the drive unit from the rest of the kit without tools and with the use of only one hand; the kit can be equipped with a recharging system based on the exploitation of the kinetic energy produced independently by the battery, for example along a downhill path or through the use of pedals; the kit includes a frame for fixing to the bicycle shaped in such a way that it can be fixed to substantially all types of bicycle frames since it has a profile that copies the corresponding profile of the bicycle wheel and is provided with a plurality of holes that allow its fixing to a fork or to the rear triangle sheaths of the bicycle; the kit is provided with resolvable connection means, which are arranged and act between the motorization unit and the frame for fixing to the bicycle, and which include at least a pair of fins sliding in a corresponding guide to determine a stable but easily resolvable constraint; elastic means for locking the sliding are provided between the frame for fastening to the bicycle and the body containing the motorization means.

These and further advantages and characteristics of the present invention will be better understood by every person skilled in the art thanks to the following description and the attached drawings, provided by way of example but not to be considered in a limiting sense, in which:
- Figs. 1-5 represent a possible example, alternative to that of Figs. 6-12 and 14-15, of a quick coupling;
- Figs. 6-12 represent a possible example of realization of the kit according to the invention, provided with a different type of attachment than that of the not claimed example of Figs. 1-5;
- Fig. 13 is a block diagram which schematically represents possible connections between the parts that can make up the present invention;
- Figs. 14-15 represent another possible embodiment of the kit according to the invention, provided with the same type of attachment with respect to that of Figs. 6-12, but equipped with two rollers for interacting with the wheel;
- Fig. 16 is a schematic perspective view of a possible embodiment of a backpack to facilitate the transport of the motorization means when they are not associated with the bicycle.

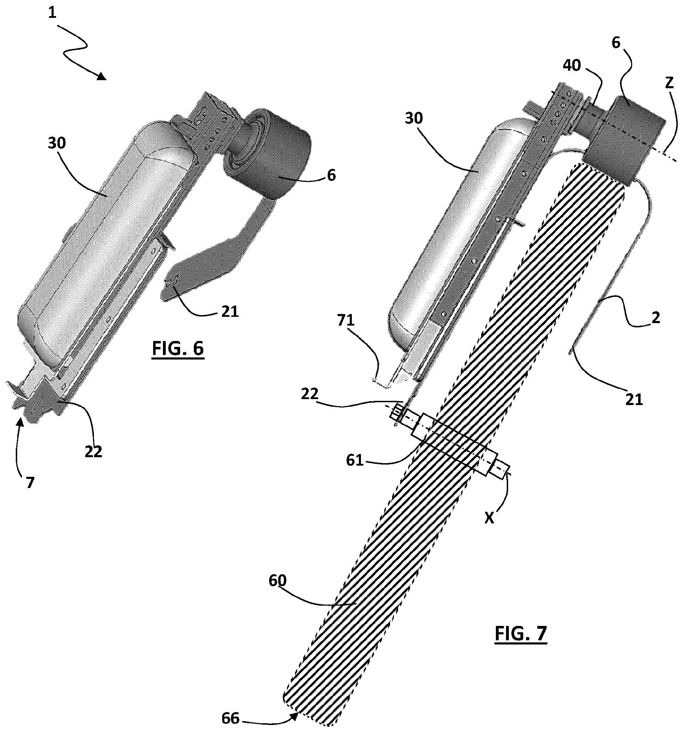

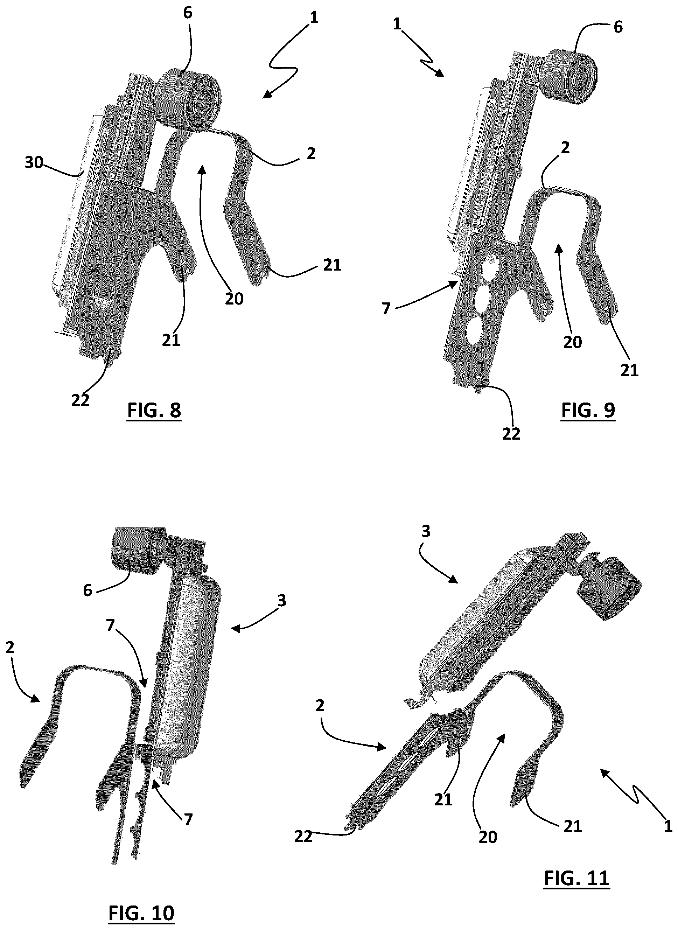

With reference to the non-limiting example of Figs. 6-12, a kit (1) for the motorization of a bicycle and similar vehicles made in accordance with the present invention includes:
- a fixing frame (2; 2') provided with fastening means to a portion of the bicycle frame;
- a motorization unit (3) comprising a containment body (30) inside which a battery (5) is arranged, as well as an electronic control unit (UC) for the motor (4), a connecting shaft ( 40) which protrudes from said containment body (30) to support at least one transmission roller (6), intended to engage a tire (6) of the bicycle and inside which a motor (4) is provided which moves in rotation the same at least one roller (6) and, consequently, said bicycle tire (6);
- resolvable connection means (7) arranged and acting between said fixing frame (2) and said motorization unit (3), shaped in such a way as to allow, depending on the configuration of use of the bicycle, the detachment and the stable association between said fixing frame (2) integral with the bicycle frame and said motorization unit (3) which can be removed.

As previously indicated, advantageously, the motorization kit in question is provided with a particular quick coupling that allows its installation and removal in extremely short times, allowing the entire device to be moved and used also on other bicycles that previously has been equipped with the appropriate quick coupling.

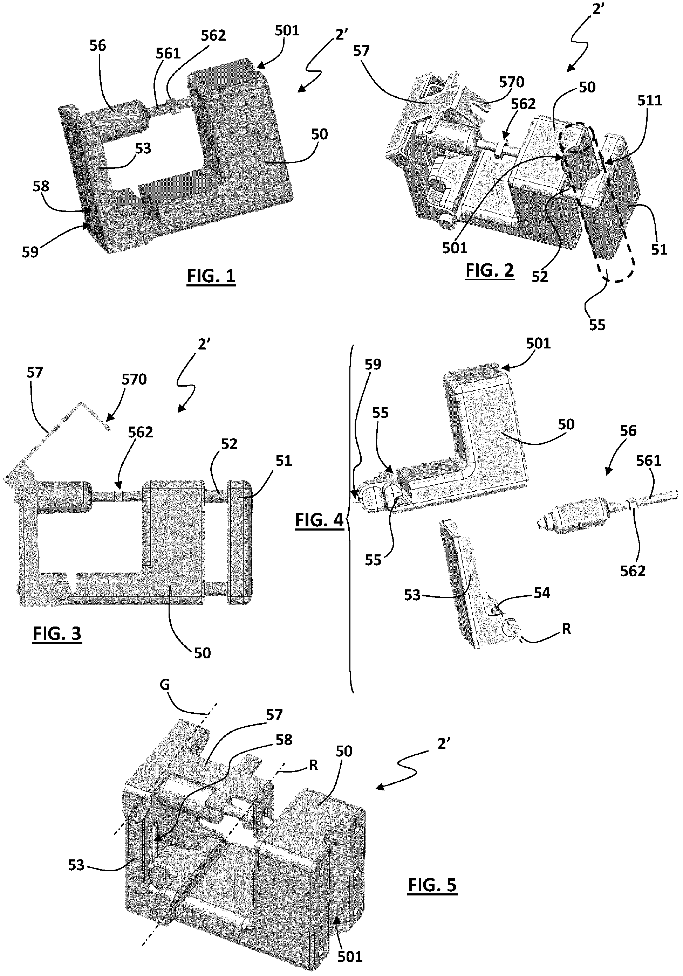

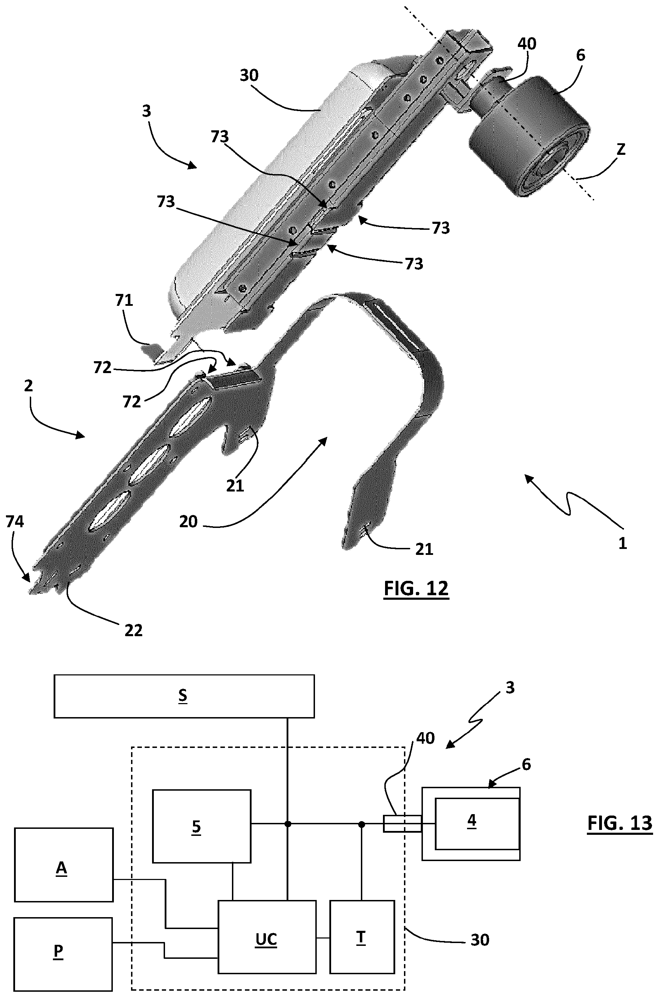

The detachable part of the kit (1) in addition to the motor (4), which in the example of Figs. 2-15 is placed outside the containment body (30), can include an electronic speed variator and a pedal assist device (indicated as a whole with the UC block in Fig. 13) as well as the battery charger or transformer (T) so as to make it completely independent from any external device.

In this way, every time the drive unit (3) is removed from the vehicle, the entire device complete with all its functions is removed, i.e. only a part of the quick coupling remains installed on the vehicle (bicycle).

It is therefore possible to use extremely low cost vehicles which, in addition to being generally less attractive for possible thefts, do not cause serious loss in the event of theft.

The kit can comprise a container, for example shaped like a backpack (B), to facilitate its transport; the same containment body (30) may be provided with a housing (not shown in the drawings) for storing the backpack when the drive unit is mounted on the bicycle. The backpack (B) can be provided with solar cells (S) and connection means (11) for connection to an electrical power source. For example, the connection means (11) can comprise USB-type ports or electrical connection cables.

As shown in the drawings, the transmission roller (6) is arranged with its axis (Z) parallel to that (X) of the wheel (6) of the bicycle so as to engage its tread (66) to transmit motion.

As previously mentioned, the motor (4) which moves the roller (6) and which therefore determines the advancement of the bicycle can be arranged inside the roller (6), for example coaxial to the latter and connected so as to bring it into rotation to determine the displacement of the bicycle following the driving in rotation of the wheel engaged by the roller (6). In a possible alternative, not described in the drawings, the motor (4) could be placed inside the containment body (30) and be kinematically connected to the roller (6) by means of the shaft (40) which, in this embodiment alternatively, it would define the driven shaft of the motor (4).

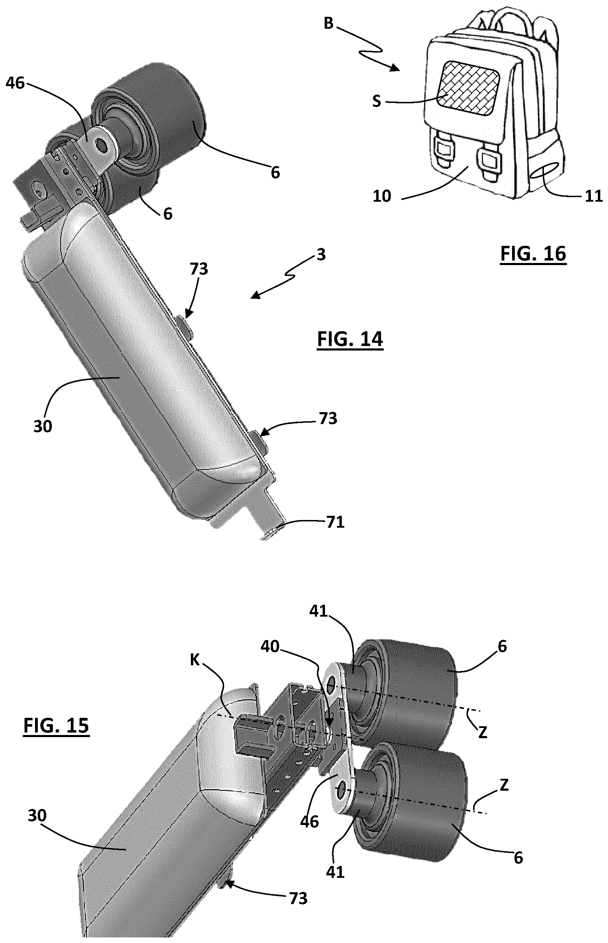

Figs. 14 and 15 show another possible example of embodiment of the invention in which the drive unit (3) is provided with two rollers (6) for the transmission of motion to the wheel. In this example, the shaft (40) departs from the containment body (3) as in the example of Figs. 6-12 but, differently from the previous example, it does not directly support a roller (6) but is connected to a rocker arm (46) which, in turn, supports the shafts (41) of two rollers (6). In Fig.15 the references (Z) indicate the axes of the rollers (6) and the axis (K) indicates the axis of the connecting shaft (40). Advantageously, the rocker arm (46) can oscillate around the axis (K) to better adapt to copy the wheel profile (60). Inside at least one of the rollers (6) there will be a motor (4) similarly to the example of Figs. 6-13. If both rollers (6) were both equipped with a motor (4), the total power supplied could correspond to the sum of the powers of the two motors (4).

Also in this case, one or both motors (4) can be used as generators, as better described below.

The connection between the fixing frame (2) and the drive unit (3) is made in such a way as to make connection and disconnection quick and simple for users. In the example shown in Figs 6-12, as well as in Figs 14-15, the resolvable connection means (7) comprise at least one pair of fins (73) presented by the containment body (3) sliding in a corresponding guide (72) presented on said fixing frame (2). In the example, the pairs of fins (73) are two, for a total of four fins (73) (two on each side) in order to limit any oscillations inside the guide (72). Between the containment body (3) and the fixing frame (2) there are means for locking the sliding (71, 74) between the tabs (73) and the guide (72). In particular, these means for locking the sliding (71, 74) between the fins (73) and the guide (72) can comprise a flexible laminar element (71) provided with a locking end that can be inserted in a corresponding seat (74) provided on the fixing frame (2); the flexible laminar element (71) exerts an elastic thrust designed to insert its locking end into the seat (74). In practice, in the block configuration the end of the element (71) is inserted in the seat (74) preventing the reciprocal sliding between the fixing frame (2) and the motorization unit (3); on the contrary, when the element (71) is moved away from the frame (2), the motorization unit (3) can slide with respect to the frame (2), thus releasing the two parts from each other. In this way it is possible to disassociate the drive unit (3) from the fixing frame (2) without any tools, even with one hand and without requiring any significant effort. As in the attached drawings, the fixing frame (2) can be shaped so as to partially copy the bicycle frame and be provided with fixing portions (21, 22) shaped and arranged so as to correspond to relative portions of the bicycle frame and of a curved portion (20) adapted to copy the profile of the tire (60). In practice, the portions (21) and (22) can be fixed, for example, at the fastening of the front or rear wheel hub or other parts of the bicycle frame.

Advantageously, the fixing frame (2) is formed by a single laminar body which develops substantially in an inverted "U" shape so as to copy the profile of a tire (60) at the curved portion (20) and is provided with fixing portions (21, 22) shaped and arranged so as to correspond to relative portions of the front fork or the chainstays or seat stays (of the rear triangle) of the bicycle. The fixing portions (21, 22) have a number and an arrangement of holes made according to the corresponding shape of the bicycle to be equipped. The fixing frame (2) is relatively simple and inexpensive and allows an extremely easy assembly on the bicycle since, depending on the structure of the bicycle frame, it allows fixing to the front fork or to the chainstays that form the rear triangle, i.e. the part of the frame that supports the rear wheel.

The control unit (UC) can be programmable so as to use the motor (4) as a current generator to charge the battery (5) when the roller (6) is rotated by the wheel (60). In practice, when the bicycle moves downhill, or is pushed only by the intervention of the pedals (P), the roller (6) can transmit the motion received from the wheel (60) to the motor (4) which will function as a current generator by charging the battery (5).

The kit (1) may also include a control device (A), for example a throttle knob or lever, connected to the control unit (UC) and adapted to regulate the power delivered by the engine (4). The same control unit (UC) can be connected to the pedals (P) of the bicycle to detect the intensity of the intervention and consequently adjust the power required to be added through the motor to human intervention and / or to switch the use of the engine (4) in generator.

The recharging of the battery (5), as well as the at least partial electric power supply of the motor (4), can be achieved by means of a photovoltaic cell, schematically represented by the block (S) in the diagram of Fig. 13. The photovoltaic cells can be of the type flexible or film and can cover portions of the bicycle that are normally hit by the sun's rays. In practice, such devices capable of transforming the energy received from the sun into electricity can be formed by flexible flat structures fixed (for example by gluing or in other convenient way) to corresponding portions of the bicycle exposed to the sun. For example, photovoltaic films (S) can be placed in correspondence with the horizontal tube, handlebar, mudguards and / or any luggage racks. The photovoltaic cells (S) can also cover the same containment body (30) or a backpack intended to contain the motorization unit (3), a backpack which will therefore have the dual function of allowing the transport of the motorization unit (3 ) when the latter is removed from the bicycle and, at the same time, will allow the battery (5) to be recharged, both while driving and when the drive unit (3) is carried in the backpack. The backpack is schematically represented in Fig. 16.

In the diagram of Fig. 13 the electrical and mechanical connections between the various components have been represented only schematically, without taking into account the dimensions of these components and any additional connection components.

As previously mentioned, the motorization kit (1) can comprise at least two fixing frames (2) which can be used mounted on different bikes to use the same motorization unit (3) alternatively on the bikes thus equipped. This is particularly advantageous for using the same drive unit (3) on bikes of different types (for example to equip a mountain bike and a cruiser bike) or on bikes placed in different locations (for example by commuters who have bikes in the two places of residence and work).

The symbol (T) in the diagram of Fig. 13 shows a transformer (T) that can be used for recharging and is contained in the drive unit (3) or inside the part that can be removed from the fixing frame (2). In Fig. 13 the transformer (T) is connected to the central unit (UC) and to a circuit that also connects it to the motor (4), to the battery (5) as well as to the photovoltaic cell (S); this representation is intended as an example and not a limitation of other types of connection.

By way of example, the battery (5) can be lithium type, the electric motor (4) can have a power of at least 250W, a control unit for controlling speed, pedaling, battery charge and battery charging.

As previously stated, Figs. 1-5 represent a not claimed example of a quick coupling usable in the kit (1) object of the present invention as an alternative to that used for the example of Figs. 6-12 and 14-15. In this not claimed embodiment, the fixing frame (2 ') is shaped to be fixed to a portion of the bicycle frame, for example to the seat tube (55) which in Fig.2 is partially and schematically represented in a discontinuous section.

In particular, the fixing frame (2') includes a fixing body (50) and a clamp element (51), which can be associated with each other by means of bolts (52). The two portions (501) and (511) of the fixing body (50) and, respectively, of the clamp element (51) which are intended for contact with the seat tube (55) can be shaped so as to copy its profile to facilitate fixing. For this reason, in the illustrated example these portions (501) and (511) are concave to better clamp the seat tube (55) which is cylindrical in shape.

The fixing body (50), on the opposite side to the clamp element (51), is associated in a resolvable way to a hinged bracket (53), which is integral with the motorization unit (3) of the kit (1) of the present invention. The bracket (53) is substantially "L" shaped, with a larger portion (the vertical part of the "L") which remains associated with the motorization unit (3), while the fixing body (50) remains fixed to the bicycle frame.

The removable connection between the fixing body (50) and the hinged bracket (53) is made by means of a pin (54) which joins two lower ends of the bracket (53) and, passing through an open groove (55) presented by the body (50), defines a hinge axis (R). The hinge with axis (R) is also constrained by one end (59) presented by the body (50) which passes through a slot (58) presented by the vertical portion of the bracket (53). Furthermore, in the upper part of the bracket (53) a gas pusher (56) is fixed which has a stem (561) provided with an enlarged portion (562). Also pivoted to the upper part of the bracket (53), around the axis indicated with (G), is a locking element (57) provided with an "L" bent end (570) and fork-shaped so as to be fitted on the stem (561) interfering with the enlarged portion (562) of the same stem (561).

In a "locking" configuration, such as the one shown in Fig. 5, the body (50) is fixed to the bracket (53) because the locking element (57) is lowered so as to make the end (570) with the enlarged portion (562) of the same stem (561) under the action of the pusher (56).

On the contrary, when the locking element is lifted, as for example in the configuration of Fig. 3, the bracket (53) is no longer locked and, by rotating around the axis (R) it can allow the detachment from the body (50) and therefore from the bicycle frame to which the same fixing body (50) is fixed.

## Claims

1. Kit (1) for motorizing a bicycle that comprises:
- a fixing frame (2) provided with fastening means to a portion of the bicycle frame;
- a motorization unit (3) comprising an electric motor (4), a containment body (30) inside which a battery (5) is arranged, as well as an electronic unit (UC) for controlling said motor (4), and at least one motion transmission roller (6) kinematically connected to said motor (4) and intended to transmit the motion received by the motor (4) to a tire (60) of the bicycle;
- resolvable connection means (7) arranged and acting between said fixing frame (2) and said motorization unit (3), shaped in such a way as to allow, depending on the configuration of use of the bicycle, the detachment and the stable association between said fixing frame (2) integral with the bicycle frame and said motorization unit (3) which can be removed;
wherein said resolvable connection means (7) comprise at least one pair of fins (73) presented by said containment body (3) sliding in a corresponding guide (72) presented on said fixing frame (2), said containment body (30) and said fixing frame (2) being provided with means for locking the sliding (71, 74) between the fins (73) and the guide (72),
wherein said at least one transmission roller (6) is arranged with its axis (Z) parallel to that (X) of the wheel (6) of the bicycle so as to engage its tread (66) to transmit motion,
**characterised in that** the fixing frame is formed by a single laminar body which develops substantially in an inverted "U" shape so as to copy the profile of a tire (60) and is provided with fixing portions (21, 22) shaped and arranged so as to correspond to relative portions of the front fork of the bicycle.

2. Kit (1) for motorizing according to claim 1 **characterized in that** said motor (4) is arranged inside said at least one transmission roller (6).

3. -Kit (1) for the motorizing according to claim 1 **characterized in that** said means for locking the sliding (71, 74) between the fins (73) and the guide (72) comprise a flexible laminar element (71) provided with a locking end that can be inserted into a corresponding seat (74) provided on said fixing frame (2), said flexible laminar element (71) exerting an elastic thrust suitable to insert its locking end into said seat (74).

4. -Kit (1) for motorizing according to one of the preceding claims **characterized in that** said control unit (UC) is programmable so as to use the motor (4) as a current generator to charge the battery (5) when the roller (6) is rotated by the wheel (60).

5. Kit (1) for motorizing according to one of the preceding claims **characterized in that** it comprises a control device (A) connected to said control unit (UC) adapted to regulate the power delivered by the motor (4), said control unit control (UC) being also connected to the pedals (P) of the bicycle to detect the intensity of intervention.

6. Kit (1) for motorizing according to one of the preceding claims **characterized in that** it comprises two or more fixing frames (2) which can be used mounted on different bikes to use the same motorization unit (3) alternatively on the bikes thus equipped.

7. Kit (1) for motorizing according to one of the preceding claims **characterized in that** said motorization unit (3) comprises, inside the part that can be removed from the fixing frame (2), a transformer (T) usable for recharging.

8. Kit (1) for motorizing according to one of the preceding claims **characterized in that** it comprises at least one photovoltaic cell unit (S) fixed to the bicycle frame and / or to said motorization unit (3) and / or to a backpack (11 ) for the containment of the motorization unit itself (3) to supply electricity by transforming the solar radiation received.

9. Kit (1) for motorizing according to one of the preceding claims **characterized in that** it comprises a backpack (11) for containing the same motorization unit (3), provided with connection means (11) to an electric power source for recharging motor vehicles.

10. Kit (1) for motorizing according to one of the preceding claims **characterized in that** said resolvable connection means (7) can be activated without tools and with the use of only one hand.

## Patentansprüche

1. Bausatz (1) zum Motorisieren eines Fahrrads, der Folgendes umfasst:
- einen Fixierungsrahmen (2), der mit Befestigungsmitteln an einem Abschnitt des Fahrradrahmens versehen ist;
- eine Motorisierungseinheit (3), die einen Elektromotor (4), einen Aufnahmekörper (30), innerhalb dessen eine Batterie (5) angeordnet ist, sowie eine elektronische Einheit (UC) zum Steuern des Motors (4) und mindestens eine Bewegungsübertragungsrolle (6) umfasst, die kinematisch mit dem Motor (4) verbunden ist und dazu bestimmt ist, die durch den Motor (4) empfangene Bewegung auf einen Reifen (60) des Fahrrads zu übertragen;
- lösbare Verbindungsmittel (7), die zwischen dem Fixierungsrahmen (2) und der Motorisierungseinheit (3) angeordnet sind und wirken und so geformt sind, dass sie je nach der Konfiguration der Verwendung des Fahrrads das Trennen und die stabile Verknüpfung zwischen dem Fixierungsrahmen (2), der mit dem Fahrradrahmen einstückig ist, und der Motorisierungseinheit (3), die entfernt werden kann, ermöglichen;
wobei die lösbaren Verbindungsmittel (7) mindestens ein Paar Rippen (73) umfassen, die durch den Aufnahmekörper (3) dargestellt sind, die in einer entsprechenden Führung (72) gleiten, die an dem Fixierungsrahmen (2) dargestellt ist, wobei der Aufnahmekörper (30) und der Fixierungsrahmen (2) mit Mitteln zum Verriegeln des Gleitens (71, 74) zwischen den Rippen (73) und der Führung (72) versehen sind,
wobei die mindestens eine Übertragungsrolle (6) mit ihrer Achse (Z) parallel zu derjenigen (X) des Rades (6) des Fahrrades angeordnet ist, um mit dessen Lauffläche (66) in Eingriff zu treten, um eine Bewegung zu übertragen,
**dadurch gekennzeichnet, dass** der Fixierungsrahmen durch einen einzelnen laminaren Körper ausgebildet ist, der sich im Wesentlichen in einer umgekehrten "U"-Form entwickelt, um das Profil eines Reifens (60) zu kopieren, und mit Fixierungsabschnitten (21, 22) versehen ist, die so geformt und angeordnet sind, dass sie relativen Abschnitten der Vordergabel des Fahrrads entsprechen.

2. Bausatz (1) zum Motorisieren nach Anspruch 1, **dadurch gekennzeichnet, dass** der Motor (4) innerhalb der mindestens einen Übertragungsrolle (6) angeordnet ist.

3. Bausatz (1) für das Motorisieren nach Anspruch 1, **dadurch gekennzeichnet, dass** die Mittel zum Verriegeln des Gleitens (71, 74) zwischen den Rippen (73) und der Führung (72) ein flexibles laminares Element (71) umfassen, das mit einem Verriegelungsende versehen ist, das in einen entsprechenden Sitz (74) eingesetzt werden kann, der an dem Fixierungsrahmen (2) bereitgestellt ist, wobei das flexible laminare Element (71) einen elastischen Schub ausübt, der geeignet ist, um sein Verriegelungsende in den Sitz (74) einzusetzen.

4. Bausatz (1) zum Motorisieren nach einem der vorhergehenden Ansprüche, **dadurch gekennzeichnet, dass** die Steuereinheit (UC) programmierbar ist, um den Motor (4) als einen Stromgenerator zum Laden der Batterie (5) zu verwenden, wenn die Rolle (6) durch das Rad (60) gedreht wird.

5. Bausatz (1) zum Motorisieren nach einem der vorhergehenden Ansprüche, **dadurch gekennzeichnet, dass** er eine Steuervorrichtung (A) umfasst, die mit der Steuereinheit (UC) verbunden ist, die dazu ausgelegt ist, die durch den Motor (4) gelieferte Leistung zu regulieren, wobei die Steuereinheitssteuerung (UC) auch mit den Pedalen (P) des Fahrrads verbunden ist, um die Intensität des Eingriffs zu erkennen.

6. Bausatz (1) zum Motorisieren nach einem der vorhergehenden Ansprüche, **dadurch gekennzeichnet, dass** er zwei oder mehr Fixierungsrahmen (2) umfasst, die an verschiedenen Fahrrädern montiert verwendet werden können, um die gleiche Motorisierungseinheit (3) abwechselnd an den so ausgestatteten Fahrrädern zu verwenden.

7. Bausatz (1) zum Motorisieren nach einem der vorhergehenden Ansprüche, **dadurch gekennzeichnet, dass** die Motorisierungseinheit (3) innerhalb des Teils, der von dem Fixierungsrahmen (2) entfernt werden kann, einen Transformator (T) umfasst, der zum Wiederaufladen verwendet werden kann.

8. Bausatz (1) zum Motorisieren nach einem der vorhergehenden Ansprüche, **dadurch gekennzeichnet, dass** er mindestens eine photovoltaische Zelleneinheit (S) umfasst, die an dem Fahrradrahmen und / oder an der Motorisierungseinheit (3) und / oder an einem Rucksack (11) zur Aufnahme der Motorisierungseinheit selbst (3) fixiert ist, um Elektrizität durch Umwandeln der empfangenen Sonnenstrahlung zuzuführen.

9. Bausatz (1) zum Motorisieren nach einem der vorhergehenden Ansprüche, **dadurch gekennzeichnet, dass** er einen Rucksack (11) zum Aufnehmen der gleichen Motorisierungseinheit (3) umfasst, der mit Verbindungsmitteln (11) zu einer elektrischen Leistungsquelle zum Wiederaufladen von Kraftfahrzeugen versehen ist.

10. Bausatz (1) zum Motorisieren nach einem der vorhergehenden Ansprüche, **dadurch gekennzeichnet, dass** die lösbaren Verbindungsmittel (7) ohne Werkzeuge und mit nur einer Hand aktiviert werden können.

## Revendications

1. Kit (1) pour motoriser un vélo qui comprend :
- un cadre de fixation (2) muni de moyens de fixation à une partie du cadre de vélo ;
- une unité de motorisation (3) comprenant un moteur électrique (4), un corps de confinement (30) à l'intérieur duquel une batterie (5) est agencée, ainsi qu'une unité électronique (UC) pour commander ledit moteur (4), et au moins un rouleau de transmission de mouvement (6) relié cinématiquement audit moteur (4) et destiné à transmettre le mouvement reçu par le moteur (4) à un pneu (60) du vélo ;
- des moyens de raccordement réglables (7) agencés et agissant ledit cadre de fixation (2) et ladite unité de motorisation (3), façonnés de telle façon à permettre, en fonction de la configuration d'utilisation du vélo, le détachement et l'association stable entre ledit cadre de fixation (2) solidaire du cadre de vélo et ladite unité de motorisation (3) qui peut être démontée ;
lesdits moyens de raccordement réglables (7) comprenant au moins une paire d'ailettes (73) présentées par ledit corps de confinement (3) coulissant dans un guide correspondant (72) présenté sur ledit cadre de fixation (2), ledit corps de confinement (30) et ledit cadre de fixation (2) étant munis de moyens de verrouillage du coulissement (71, 74) entre les ailettes (73) et le guide (72),
ledit au moins un rouleau de transmission (6) étant agencé avec son axe (Z) parallèle à celui (X) de la roue (6) du vélo de façon à venir en prise avec sa bande de roulement (66) pour transmettre le mouvement,
**caractérisé en ce que** le cadre de fixation est formé par un corps laminaire unique qui se développe sensiblement en forme de "U" inversé de façon à copier le profil d'un pneu (60) et est pourvu de parties de fixation (21, 22) façonnées et agencées de façon à correspondre à des parties relatives de la fourche avant du vélo.

2. Kit (1) pour motoriser selon la revendication 1, **caractérisé en ce que** ledit moteur (4) est agencé à l'intérieur dudit au moins un rouleau de transmission (6).

3. Kit (1) pour motoriser selon la revendication 1, **caractérisé en ce que** lesdits moyens de verrouillage du coulissement (71, 74) entre les ailettes (73) et le guide (72) comprennent un élément laminaire souple (71) muni d'une extrémité de verrouillage qui peut être insérée dans un siège correspondant (74) prévu sur ledit cadre de fixation (2), ledit élément laminaire souple (71) exerçant une poussée élastique appropriée pour insérer son extrémité de verrouillage dans ledit siège (74).

4. Kit (1) pour motoriser selon l'une des revendications précédentes, **caractérisé en ce que** ladite unité de commande (UC) est programmable de façon à utiliser le moteur (4) en tant que générateur de courant pour charger la batterie (5) lorsque le rouleau (6) est mis en rotation par la roue (60).

5. Kit (1) pour motoriser selon l'une des revendications précédentes, **caractérisé en ce qu'**il comprend un dispositif de commande (A) raccordé à ladite unité de commande (UC) adaptée pour réguler la puissance délivrée par le moteur (4), ladite commande d'unité de commande (UC) étant également raccordée aux pédales (P) du vélo pour détecter l'intensité de l'intervention.

6. Kit (1) pour motoriser selon l'une des revendications précédentes, **caractérisé en ce qu'**il comprend deux, ou plus, cadres de fixation (2) qui peuvent être utilisés montés sur des vélos différents pour utiliser la même unité de motorisation (3) alternativement sur les vélos ainsi équipés.

7. Kit (1) pour motoriser selon l'une des revendications précédentes, **caractérisé en ce que** ladite unité de motorisation (3) comprend, à l'intérieur de la partie pouvant être retirée du cadre de fixation (2), un transformateur (T) utilisable pour la recharge.

8. Kit (1) pour motoriser selon l'une des revendications précédentes, **caractérisé en ce qu'**il comprend au moins une unité de cellule photovoltaïque (S) fixée au cadre du vélo et/ou à ladite unité de motorisation (3) et/ou à un sac à dos (11) pour le confinement de l'unité de motorisation elle-même (3) pour fournir de l'électricité par transformation du rayonnement solaire reçu.

9. Kit (1) pour motoriser selon l'une des revendications précédentes, **caractérisé en ce qu'**il comprend un sac à dos (11) destiné à contenir la même unité de motorisation (3), munie de moyens de raccordement (11) à une source d'énergie électrique pour recharger des véhicules à moteur.

10. Kit (1) pour motoriser selon l'une des revendications précédentes, **caractérisé en ce que** lesdits moyens de raccordement réglables (7) peuvent être activés sans outils et avec l'utilisation d'une seule main.
